**Europäisches Patentamt**

**European Patent Office**

**Office européen des brevets**

(19)

(11) Publication number : **0 365 588 B1**

# (12) EUROPEAN PATENT SPECIFICATION

(45) Date of publication of patent specification :
**08.04.92 Bulletin 92/15**

(51) Int. Cl.⁵ : **A01G 9/24,** A01G 31/02

(21) Application number : **88906206.3**

(22) Date of filing : **04.07.88**

(86) International application number :
**PCT/SE88/00367**

(87) International publication number :
**WO 89/00001 12.01.89 Gazette 89/02**

## (54) DEVICE FOR ARTIFICIAL GERMINATION.

(30) Priority : **03.07.87 SE 8702749**

(43) Date of publication of application :
**02.05.90 Bulletin 90/18**

(45) Publication of the grant of the patent :
**08.04.92 Bulletin 92/15**

(84) Designated Contracting States :
**AT BE CH DE FR GB IT LI LU NL**

(56) References cited :
**DE-A- 1 582 706**

(73) Proprietor : **ÖUNAPUU, Endel**
**Strandgatan 4**
**S-216 12 Malmö (SE)**

(72) Inventor : **ÖUNAPUU, Endel**
**Strandgatan 4**
**S-216 12 Malmö (SE)**

(74) Representative : **Ström, Tore et al**
**Ström & Gulliksson AB Studentgatan 1 P.O.**
**Box 4188**
**S-203 13 Malmö (SE)**

EP 0 365 588 B1

## Description

The invention relates to a device for supplying air, water and light emission in artificial germination, comprising at least one gable framework, at least one end section and a plurality of tubes connecting the gable framework and the end section, the tubes being arranged at least two by two in one horizontal plane.

Artificial germination of grass, vegetables, garden flowers and the like in a grow chamber is a method well known and high efficient in producing e.g. forage for horses. Starting with plain grain e.g. oats there is in approximately eight days produced grass 15-20 cm high while supplying only air, water and light emission.

Prior art grow chambers of the same purpose comprise a closed boxlike container provided with a conventional inside shelving on which trays containing the grain are placed. Inside the chamber there is also in a conventional wary arranged tubes for water and air, spray nozzles, lamps, temperature sensors, and in modern sites sensors also for humidity. Water and air pumps for the supply of air and water are arranged together with a monitoring and control unit.

Inside the grow chamber there is maintained an extremely favourable growing environment to the starting material in the form of oats grain or the like in the aspect of high humidity and a high temperature. Unfortunately this environment is favourable among other things also to mould. Sponge spores exist to some extent in the grain also after special treatment. Due to the arrangement of the interior of the grow chamber with shelvings, water tubes, valves and nozzles many possibilities are provided for the attachment of mould and furthermore the cleaning thereof is made more difficult resulting in a rapid and a devastating growth of mould within the grow chamber even if there is a regular cleaning. The construction also makes the exchange of parts or of the entire shelving or components out of order troublesome, time consuming and expensive.

An object of the present invention is to provide a device in artificial germination which is without the above mentioned drawbacks and which makes possible a continuing production of forage without interruptions caused by the grow of mould.

In order to achieve the object mentioned above the device of the invention has obtained the characteristics appearing from claim 1.

The invention will be explained in more detail by means of an embodiment, reference being made to the accompanying drawings, in which

Fig 1 is a perspective view of a gable framwork according to the invention,

Fig 2 is perspective view showing a first type of tubes according to the invention,

Fig 3 is a perspective view showing a second type of tubes according to the invention,

Fig 4 is a perspective view showing the device according to the invention, and

Fig 5 is a perspective view of a tray utilized in the germination by means of the device.

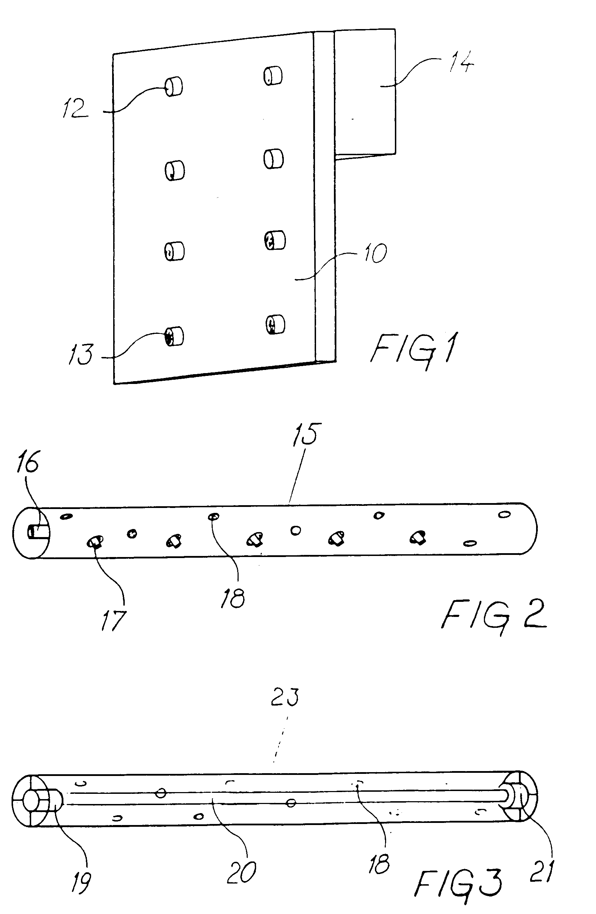

Fig 1 shows a flat box shaped gable framework 10 which on one side is provided with pipe joints 12, 13 receiving two different types of tubes. A driving cartridge 14 is arranged on the opposite side of the gable framework. The driving cartridge 14 comprises an air pump, an air heating and cooling device and connecting means for the supply of water and electric current.

With reference to fig 2 the device according to the invention further comprises a first type of a tube 15, in which a plurality of holes 18 have been cut. The tube 15 is in one end provided with an automatic coupling fitting in the joint 12. The water tube 16 extends within the tube 15 and is in one end provided with an automatic coupling to be connected to coupling means within the pipe joint 12, the other end of the tube 16 being sealed. By a simple grip the tube 15 is connected to the pipe joint 12, the automatic coupling of the water tube 16 simultaneously being connected to corresponding coupling means within the pipe joint 12. A plurality of short tubes extend from the water tube 16, and each of the short tubes end with nozzles 17 for the spraying of water. The nozzles 17 extend from the tube 15 in radial direction.

The device according to the invention further comprises a lighting tube 23 pervious to light in which a plurality of holes 18 have been cut. A fluorescent lamp is arranged together with a holder 19, 21 inside the lighting tube 23. The holder 21 is provided with a coupling means which is received in a corresponding coupling means within the pipe joint 13 when the lighting tube 23 is inserted in the corresponding pipe joint 13. The gable framework 10 comprises a tube coil in which water is preheated before being supplied to the tubes 15 through the pipe joints 12. Air is supplied to all the tubes 15, 23 through the joints 12, 13 and through a multiple joint within the gable framework 10.

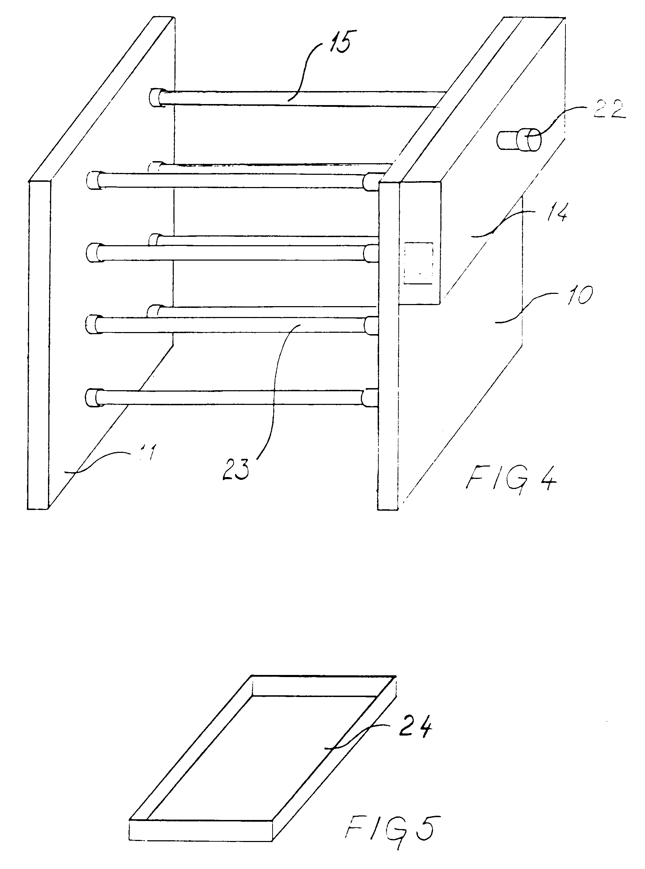

With reference to fig 4 the device according to the invention is assembled by one gable framework 10, six tubes 15, two lighting tubes 21, and one end section 11. The end section 11 is provided with simplyfied holders 23 for the tubes 15, 23. The pair of tubes at the bottom line are lighting tubes 23. The pipe joints 12; 13 are constructed to absorb all forces originating in the load when the load on the tubes 15, 23 is moderate, and in that case the end section 11 can be omitted.

A plastic tray 24 in which the grain is kept during the period of growth is shown in fig 5.

In the preferred embodiment the entire device according to fig 4 is arranged inside a chamber, container or another compartment which is sealed towards the environment, a door excepted. The walls of the compartment may be completely smooth because all necessary components are provided in the tubes 15, 23, on the gable framework 10 and on the end section 11.

Also grain which have been treated comprises small amounts of mould spores, and this type of spores exist also in the compartment where the device according to the invention is situated. As a result of the compartment being constructed completely without protruding components and components difficult to clean and the tubes 15, 23 being extremely easy to remove to be exchanged or cleaned the invention provides an environment with an absolute minimum existence and growth of mould but provides conditions optimal to the growth of fodder-plants.

The tubes 15, 23 are provided in different lengths to different sizes of the compartment. In very large sizes there are provided middle pieces each of them being provided with pipe joints 12, 13 in both ends, the middle pieces being separated by a suitable distance from each other and from the gable

framework 10 and the end section 11, and the tubes 15, 23 are open and provided with automatic couplings at both ends. In larger extensions the capacity of the driving cartridge is also correspondingly improved.

## Claims

1. Device for supplying air, water and light emission in artificial germination, comprising at least one gable framework (10) and a plurality of shelf stays (15; 23) extending substantially at right angles to the gable framework (10), the shelf stays being arranged at least two by two in one horizontal plane, **characterized** in that the shelf stays (15; 23) are constituted by tubes, that at least one gable framework (10) is provided with pipe joints (12; 13) adapted to the tubes (15; 23) and with coupling means for air, water and electric current, that the tubes (15; 23) are provided with a plurality of holes (18) for the exhaust of air through the tubes (15; 23), and that tubes (16) for water are arranged within at least one of the tubes (15).

2. Device according to claim 1, **characterized** in that at least one tube (23) is made of a material pervious to light and that lighting means (20) and holders (21) thereto are arranged within the tube (23) or tubes (23), respectively.

3. Device according to claim 1 or 2, **characterized** in that the tubes (16) for water are provided with nozzles (17) at least partly extending out of the holes (18).

4. Device according to any of the preceeding claims 1-3, **characterized** in that the tubes (15; 23) in at least one end thereof are provided with automatic coupling means to accomplish a simple connection to the pipe joints (12; 13).

5. Device according any of the claims 1-4, **characterized** in that the tubes (16) for water and the holders (21) are provided with automatic coupling means to accomplish a simple connection to the coupling means of the gable framework (10).

6. Device according to any of the claims 1-5, **characterized** in that at least one gable framework (10) is provided with a preheating device for the water which is to be supplied through the tubes (16).

7. Device according to any of the claims 1-6, **characterized** in that air temperature and humidity sensors are provided on at least one gable framework (10).

8. Device according to any one of the claims 1-7, **characterized** in that a driving cartridge (14) is provided on the outside of at least one gable framework (10), the driving cartridge (14) comprising coupling means (22) for the water supply, electric coupling means for the power supply, a fan for supplying air under excess pressure in the tubes (15; 23) through the pipe joints (12; 13), and a control unit for the control and measuring of the air and water supply to the tubes (15; 16; 23).

9. Device according to any of the claims 1-8, **characterized** by at least one end section (11) receiving the free ends of the shelf stays (15; 23).

## Patentansprüche

1. Vorrichtung zum Zuführen von Luft, Wasser und Lichtemission bei künstlicher Sprossung, umfassend mindestens ein Gielbelrahmenwerk (10) und eine Anzahl von im wesentlichen unter einem rechten Winkel zum Giebelrahmenwerk (10) verlaufenden Fachstreben (15; 23), die zumindest zwei zu zwei (in je zwei Einheiten) in einer waagerechten Ebene angeordnet sind, dadurch **gekennzeichnet,** daß die Fachstreben (15; 23) durch Rohre gebildet sind, daß mindestens ein Giebelrahmenwerk (10) mit an die Rohre (15; 23) angepaßten Rohranschlüssen (12; 13) und mit Kupplungsmitteln für Luft, Wasser und elektrischen Strom versehen ist, daß die Rohre (15; 23) mit einer Anzahl oder Vielzahl von Bohrungen (18) für den Austritt von Luft durch die Rohre (15; 23) versehen sind und daß Rohre (16) für Wasser innerhalb mindestens eines der Rohre (15) angeordnet sind.

2. Vorrichtung nach Anspruch 1, dadurch gekennzeichnet, daß mindestens ein Rohr (23) aus einem lichtdurchlässigen Werkstoff besteht und daß Beleuchtungseinheiten (20) und Halter (21) daran in dem Rohr (23) bzw. in den Rohren (23) angeordnet sind.

3. Vorrichtung nach Anspruch 1 oder 2, dadurch gekennzeichnet, daß die Rohre (16) für Wasser mit zumindest teilweise aus den Bohrungen (18) herausragenden Düsen (17) versehen sind.

4. Vorrichtung nach einem der vorangehenden Ansprüche 1 bis 3, dadurch gekennzeichnet, daß die Rohre (15; 23) in mindestens einem Ende derselben mit automatischen Kupplungsmitteln für eine einfache Verbindung mit den Rohranschlüssen (12; 13) versehen sind.

5. Vorrichtung nach einem der Ansprüche 1 bis 4, dadurch gekennzeichnet, daß die Rohre (16) für Wasser und die Halter (21) mit automatischen Kupplungsmitteln für eine einfache Verbindung mit den Kupplungsmitteln des Giebelrahmenwerks (10) versehen sind.

6. Vorrichtung nach einem der Ansprüche 1 bis 5, dadurch gekennzeichnet, daß mindestens ein Giebelrahmenwerk (10) mit einer Vorwärmvorrichtung für das durch die Rohre (16) zuzuführende Wasser versehen ist.

7. Vorrichtung nach einem der Ansprüche 1 bis 6, dadurch gekennzeichnet, daß an mindestens einem Gielbelrahmenwerk (10) Lufttemperatur- und -feuchtigkeitssensoren vorgesehen sind.

8. Vorrichtung nach einem der Ansprüche 1 bis 7, dadurch gekennzeichnet, daß an der Außenseite mindestens eines der Gielbelrahmenwerke (10) ein Antriebs- oder Betriebsgehäuse (14) vorgesehen ist, das Kupplugsmittel (22) für die Wasserzufuhr, elektrische Anschlußmittel für Strom- oder Energiezuspeisung, ein Gebläse zum Zuführen von Luft unter Überdruck in die Rohre (15; 23) über die Rohranschlüsse (12; 13) und eine Steuer- oder Regeleinheit für Regelung und Dosierung der Luft- und Wasserzuspeisung zu den Rohren (15; 16; 23) umfaßt.

9. Vorrichtung nach einem der Ansprüche 1 bis 8, gekennzeichnet durch mindestens einen Endabschnitt (11) zum Aufnehmen der frein Enden der Fachstreben (15; 23).

## Revendications

1. Dispositif d'amenée d'air, d'eau et d'émission lumineuse dans la germination artificielle, comprenant au moins un châssis à pignon (10) et une pluralité de supports de rayonnage (15;23) qui s'étendent sensiblement perpendiculairement au châssis à pignon (10), les supports de rayonnage étant disposés au moins deux par deux dans un plan horizontal, carartérisé en ce que les supports de rayonnage (15;23) sont constitués par des tubes, qu'au moins un châssis à pignon (10) est pourvu de raccords de tuyauterie (12;13), adaptés aux tubes (15;23) et de moyens d'accouplement pour l'air, l'eau et le courant électrique, en ce que les tubes (15;23) sont pourvus d'une pluralité de trous (18) pour l'échappement de l'air par les tubes (15;23), et en ce que des tubes (16) pour l'eau sont disposés à l'intérieur d'au moins l'un des tubes (15).

2. Dispositif selon la revendication 1, carartérisé en ce qu'au moins un tube (23) est en un matériau perméable à la lumière et que des moyens d'éclairage (20) et des supports (21) pour ceux-ci sont disposés à l'intérieur du tube (23) ou des tubes (23), respectivement.

3. Dispositif selon la revendication 1 ou la revendication 2, carartérisé en ce que les tubes (16) pour l'eau sont pourvus de buses (17), qui s'étendent au moins partiellement hors des trous (18).

4. Dispositif selon l'une des revendications 1 à 3 précédentes, carartérisé en ce qu'en au moins l'une de leurs extrémités, les tubes (15;23) sont pourvus de moyens de raccordement automatique, pour assurer une liaison simple aux raccords de tuyauterie (12;13).

5. Dispositif selon l'une des revendications 1 à 4 précédentes, carartérisé en ce que les tubes (16) pour l'eau et les supports (21) sont pourvus de moyens de raccordement automatiques, pour assurer une liaison simple au moyen de raccordement du châssis à pignon (10).

6. Dispositif selon l'une des revendications 1 à 4 prérédentes, carartérisé en ce qu'au moins un châssis à pignon (10) est pourvu d'un dispositif de préchauffage, pour l'eau qui doit être amenée par les tubes (16).

7. Dispositif selon l'une des revendications 1 à 6 précédentes, carartérisé en ce que des capteurs de la température et de l'humidité de l'air sont prévus sur au moins un châssis à pignon (10).

8. Dispositif selon l'une des revendications 1 à 7 précédentes, carartérisé en ce qu'une cartourhe d'entraînement (14) est prévue à l'extérieur d'au moins un châssis à pignon (10), la cartourhe d'entrainement (14) comprenant un moyen de raccordement (22) pour l'alimentation en eau, un moyen de raccordement électrique pour l'énergie électrique, un ventilateur pour fournir de l'air sous pression dans les tubes (15;23), par les raccords de tuyauterie (12;13), et une unité de commande, pour assurer la commande et la mesure de l'alimentation en air et en eau des tubes (15;16;23).

9. Dispositif selon l'une des revendications 1 à 8 précédentes, carartérisé par au moins une section (11) recevant les extrémités libres des supports de rayonnage (15;23).

*FIG 1*

*FIG 2*

*FIG 3*

FIG 4

FIG 5